# EUROPÄISCHE PATENTSCHRIFT

(11) **EP 2 399 861 B1**
(45) Veröffentlichungstag und Bekanntmachung des Hinweises auf die Patenterteilung: **10.08.2016**
(21) Anmeldenummer: 11004579.6
(22) Anmeldetag: 06.06.2011
(51) Int. Cl.: B66F 9/22, F16H 61/4165, F15B 7/00, F15B 21/04

(54) **Hydrostatisches Antriebssystem**
Hydrostatic drive system
Système d'entraînement hydrostatique

(30) Priorität: 22.06.2010 DE 102010024551
(43) Veröffentlichungstag der Anmeldung: 28.12.2011
(73) Patentinhaber: Linde Hydraulics GmbH & Co. KG, 63743 Aschaffenburg (DE)
(72) Erfinder: Welschof, Bernward, Dr., 63762 Großostheim (DE); Schlosser, Robert, 63857 Waldaschaff (DE); Krittian, Lukas, 63739 Aschaffenburg (DE)
(74) Vertreter: Geirhos, Johann

(56) Entgegenhaltungen:
- EP-A2- 2 050 970
- DE-A1-102008 054 084

## Beschreibung

Die Erfindung betrifft ein hydrostatisches Antriebssystem einer mobilen Arbeitsmaschine, insbesondere eines Flurförderzeugs, mit einer Arbeitshydraulik und einer hydraulischen Pumpe zur Versorgung der Arbeitshydraulik, wobei die Pumpe von einer Antriebsmaschine, insbesondere einem Verbrennungsmotor, angetrieben ist und als im Fördervolumen verstellbare Verstellpumpe ausgebildet ist.

Aus der DE 10 2008 054 084 A1 ist ein Load-Sening geregeltes Antriebssystem einer mobilen Arbeitsmaschine bekannt, bei dem eine als Load-Sensing-geregelte, im Fördervolumen verstellbare Verstellpumpe die Verbraucher der Arbeitshydraulik, eine Lenkungseinrichtung und einen Lüfterantrieb einer Wärmetauschereinrichtung mit Druckmittel versorgt. Mittels einer Ventileinrichtung kann die Drehzahl des Lüfterantriebs verstellt werden. Die Wärmetauschereinrichtung ist in einer zu einem Behälter geführten Behälterleitung der Lenkungseinrichtung und der Arbeitshydraulik angeordnet.

Bei bekannten hydrostatischen Antriebssystemen erfolgt im Betrieb des Antriebssystems eine Wärmeeinbringung in das Druckmittel des Antriebssystems aufgrund von mechanischer Reibung und Strömungsverlusten. Die Strömungsverluste entstehen vornehmlich, indem gezielt Energie durch Abdrosselung des Druckmittels in Wärme umgewandelt und in das Druckmittel eingeleitet wird. Derartige Strömungsverluste treten vor allem in einem Betriebszustand im Senkenbetrieb einer an einem Hubantrieb der Arbeitshydraulik anstehenden Last auf, wobei dem Druckmittel des Antriebssystems durch die Umwandlung der Hubenergie in Wärme eine hohe Wärmemenge zugeführt wird, oder bei einem Bremsbetrieb eines Fahrantriebs auf, indem der Förderstrom einer Pumpe, bevorzugt der die Arbeitshydraulik versorgenden Pumpe, in einem sogenannten Retarderbetrieb abgedrosselt und somit Energie in Wärme umgewandelt wird, um an der Antriebsmaschine ein Zusatzbremsmoment zur Verfügung zu stellen. Sofern das Antriebssystem einen hydrostatischen Fahrantrieb im geschlossenen Kreislauf aufweist, erfolgt ein hoher Wärmeeintrag in das Druckmittel ebenfalls in einem hydrostatischen Abbremsbetrieb, bei dem das Stützmoment des Antriebsmotors zur Abbremsung der Arbeitsmaschine nicht ausreichend ist und zur Erreichung einer gewünschten Verzögerung der Arbeitsmaschine ein Druckmittelstrom in dem geschlossenen Kreislauf des Fahrantriebs über Druckbegrenzungsventileinrichtungen abgedrosselt wird und hierbei Energie in Wärme umgewandelt wird.

Zum Abtransport der in das Druckmittel des hydrostatischen Antriebssystem eingebrachten Wärmemenge an die Umgebung ist eine Wärmetauschereinrichtung vorgesehen, die bei bekannten Antriebssystemen in einer zu einem Behälter geführten Rücklaufleitung einer Druckwaage angeordnet ist und somit von dem Rücklaufstrom in der Rücklaufleitung durchströmt wird. Die Druckwaage ist eingangsseitig an die Förderleitung der die Arbeitshydraulik versorgenden Pumpe angeschlossen und weist die Funktion einer Eingangsdruckwaage für die Arbeitshydraulik auf, die den von der Pumpe gelieferten Förderstrom in einen Nutzvolumenstrom, der an den angesteuerten Verbraucher der Arbeitshydraulik zur Erzielung der gewünschten Verbraucherbewegung benötigt wird, beispielsweise für den Hebenbetrieb eines Hubantriebs der Arbeitshydraulik, und einen Überschussvolumen aufteilt, der über die Druckwaage und die Rücklaufleitung zum Behälter abströmt. Sofern von einem angesteuerten Verbraucher der Arbeitshydraulik ein Druckmittelstrom von der Pumpe zur Erzielung der gewünschten Verbraucherbewegung angefordert wird, beispielsweise im Hebenbetrieb eines Hubantriebs der Arbeitshydraulik, strömt somit über die Druckwaage der Überschussvolumenstrom, der der Differenz des von der Pumpe gelieferten Förderstroms und dem von dem angesteuerten Verbraucher angeforderten Nutzvolumenstrom entspricht, als Druckmittelvolumenstrom über die Rücklaufleitung der Wärmetauschereinrichtung zu und durchströmt diese. Sofern jedoch ein angesteuerter Verbraucher der Arbeitshydraulik keinen Volumenstrom von der Pumpe zur Erzielung der Pumpe anfordert, beispielsweise im Senkenbetrieb eines Hubantriebs der Arbeitshydraulik, strömt über die Druckwaage ein Gesamtvolumenstrom, der der Summe des von dem Verbraucher gelieferten und abströmenden Druckmittelstroms und des von der Pumpe gelieferten Förderstroms entspricht, als Druckmittelvolumenstrom über die Rücklaufleitung der Wärmetauschereinrichtung zu und durchströmt diese.

Bei bekannten Antriebssystemen ist die die Arbeitshydraulik versorgende Pumpe als im Fördervolumen konstante Konstantpumpe ausgebildet, deren Förderstrom proportional zur Drehzahl der die Pumpe antreibenden Antriebsmaschine ist. Der die Wärmetauschereinrichtung über die Rücklaufleitung durchströmende Druckmittelvolumenstrom wird hierbei aufgrund des konstanten Fördervolumens der Konstantpumpe im Wesentlichen von der Drehzahl der Antriebsmaschine und dem von den angesteuerten Verbrauchern der Arbeitshydraulik angeforderten Nutzvolumenstrom bestimmt. Der die Wärmetauschereinrichtung durchströmende Druckmittelvolumenstrom in der Rücklaufleitung, der die Kühlleistung und somit die Abkühlung des Druckmittels bestimmt, unterliegt bei gattungsgemäßen Antriebssystemen jedoch hohen Schwankungen, der von dem entsprechenden Betriebszustand abhängt, beispielsweise dem Hebenbetrieb oder dem Senkenbetrieb eines Hubantriebs der Arbeitshydraulik. Hierdurch kann bei gattungsgemäßen Antriebssystemen eine Überhitzung des Druckmittels auftreten. Zudem treten bei hohen Druckmittelströmen in der Rücklaufleitung, beispielsweise im Senkenbetrieb eines Hubantriebs der Arbeitshydraulik, hohe Durchströmungsverluste an der Wärmetauschereinrichtung und somit hohe Leistungsverlusten beim Durchströmen der Wärmetauschereinrichtung auf.

Der vorliegenden Erfindung liegt die Aufgabe zugrunde, ein Antriebssystem der eingangs genannten Gattung zur Verfügung zu stellen, mit dem bei geringem Bauaufwand eine Überhitzung des Druckmittels vermieden werden kann und geringe Leistungsverluste beim Durchströmen einer Wärmetauschereinrichtung erzielt werden können.

Diese Aufgabe wird erfindungsgemäß dadurch gelöst, dass einer von der Pumpe zu der Arbeitshydraulik geführten Förderleitung eine Druckwaage zugeordnet ist, die als Eingangsdruckwaage der Arbeitshydraulik ausgebildet ist und in einer von der Förderleitung zu einem Behälter abzweigenden Rücklaufleitung angeordnet ist und als in Zwischenstellung drosselndes Steuerventil mit einer Sperrstellung und einer Durchflussstellung ausgebildet, wobei die Druckwaage von dem in der Förderleitung anstehenden Förderdruck der Pumpe in Richtung der Durchflussstellung und von einer Feder sowie dem höchsten Lastdruck der angesteuerten Verbraucher der Arbeitshydraulik in Richtung der Sperrstellung beaufschlagt ist, wobei in der Rücklaufleitung, eine Wärmetauschereinrichtung zur Kühlung des Druckmittels des Antriebssystems angeordnet ist, wobei durch eine Veränderung des Fördervolumens der Verstellpumpe der über die Wärmetauschereinrichtung strömende Druckmittelvolumenstrom an den Kühlleistungsbedarf des Antriebssystems anpassbar ist. Erfindungsgemäß wird somit eine im Fördervolumen verstellbare Verstellpumpe zur Versorgung der Arbeitshydraulik verwendet, wodurch durch entsprechende Veränderung und somit Anpassung des Fördervolumens der Verstellpumpe der in der Rücklaufleitung der Druckwaage die Wärmetauschereinrichtung durchströmende Druckmittelvolumenstrom an den Kühlleistungsbedarf und somit die benötigte Kühlleistung angepasst werden kann. Durch die Verwendung einer Verstellpumpe kann die Veränderung und somit die Anpassung des Fördervolumens der Verstellpumpe unabhängig von der Drehzahl der die Pumpe antreibenden Antriebsmaschine vorgenommen werden. Durch entsprechende Erhöhung des Fördervolumens der Verstellpumpe kann hierbei ein hoher Druckmittelstrom in der Rücklaufleitung zur Durchströmung der Wärmetauschereinrichtung im Falle einer hohen benötigten Kühlleistung zur Verfügung gestellt werden. Entsprechend kann bei einem geringen Kühlleistungsbedarf durch eine Verringerung des Fördervolumens der Verstellpumpe der über die Rücklaufleitung abströmende und die Wärmetauschereinrichtung durchströmende Druckmittelvolumenstrom im Falle einer geringen benötigten Kühlleistung verringert werden. Hierdurch wird durch einfache Verstellung des Fördervolumens der Verstellpumpe ermöglicht, den die Wärmetauschereinrichtung durchströmenden Druckmittelstrom an den benötigten Kühlleistungsbedarf anzupassen, wodurch einerseits eine Überhitzung des Druckmittels wirksam vermieden werden kann und andererseits die Durchströmungsverluste und somit die Leistungsverluste beim Durchströmen der Wärmetauschereinrichtung verringert werden können.

Die Druckwaage ist als in Zwischenstellung drosselndes Steuerventil mit einer Sperrstellung und einer Durchflussstellung ausgebildet, wobei die Druckwaage von dem in der Förderleistung anstehenden Förderdruck der Pumpe in Richtung der Durchfiussstellung und von einer Feder sowie dem Lastdruck der Arbeitshydraulik in Richtung der Sperrstellung beaufschlagt ist. Die Druckwaage dient somit zur Bereitstellung des von den angesteuerten Verbrauchern der Arbeitshydraulik von der Pumpe angeforderten Förderstroms, wobei überschüssig geförderter Förderstrom der Pumpe über die Rücklaufleitung zur Durchströmung der Wärmetauschereinrichtung zur Verfügung gestellt werden kann. Im Falle eines von einem angesteuerten Verbraucher der Arbeitshydraulik abgegebenen Druckmitfielstroms kann dieser als Rücklaufstrom über eine derartige Druckwaage an den Behälter unter Durchströmung der Wärmetauschereinrichtung geführt werden. Sofern kein Verbraucher der Arbeitshydraulik angesteuert ist, ermöglicht eine derartige Druckwaage auf einfache Weise, den Förderstrom der Pumpe zur Durchströmung der Wärmetauschereinrichtung zu verwenden.

Gemäß einer bevorzugten Ausgestaltungsform der Erfindung ist das Fördervolumen der Verstellpumpe stufenlos veränderbar. Mit einer stufenlosen Einstellung des Fördervolumens kann eine stufenlose Anpassung des die Kühlereinrichtung durchströmenden Druckmittelvolumenstroms an den benötigten Kühlleistungsbedarf erzielt werden, wodurch das Antriebssystem effektiv vor einer Überhitzung geschützt werden kann.

Der erforderliche Kühlleistungsbedarf, anhand dessen das Fördervolumen der Verstellpumpe gesteuert wird, kann anhand der Betriebszustände des Antriebssystems ermittelt und abgeschätzt werden. So kann beispielsweise in Betriebszuständen, in denen durch Abdrosselung Wärme in das Druckmittel eingebracht wird, beispielsweise beim Senkenbetrieb eines Hubantriebs der Arbeitshydraulik oder einem Retarderbetrieb in einem Bremszustand des Fahrantriebs sowie einem hydrostatischen Abbremsbetrieb eines Fahrantriebs, ein entsprechender Kühlleistungsbedarf ermittelt bzw. abgeschätzt werden, um das Fördervolumen der Pumpe an den benötigten Kühlleistungsbedarf anzupassen. Zudem kann anhand dieser Betriebszustände, insbesondere bei einem Senkenbetrieb eines Hubantriebs, abgeschätzt werden, dass bereits ein hoher Rücklaufvolumenstrom über die Rücklaufleitung die Wärmetauschereinrichtung durchströmt, so dass durch entsprechende Anpassung und Verringerung des Fördervolumens der Pumpe die Durchströmungsverluste und Leistungsverluste beim Durchströmen der Wärmetauschereinrichtung verringert werden können. Derartige Betriebszustände können auf einfache Weise anhand der Ansteuersignale von Betätigungseinrichtungen, beispielsweise eines Joysticks bzw. eines Fahr- und/oder Bremspedals, für die Arbeitshydraulik sowie den Fahrantrieb detektiert werden.

Gemäß einer vorteilhaften Ausbildung der Erfindung ist zur Erfassung des Kühlieistungsbedarfs des Antriebssystems ein die Temperatur des Druckmittels erfassender Temperatursensor vorgesehen. Anhand der Temperatur des Druckmittels des Antriebssystems kann der erforderliche Kühlleistungsbedarf auf einfache Weise ermittelt werden. Anhand der Temperatur des Druckmittels und entsprechender vorgebbarer Grenzwerte kann hierbei ein Überhitzen des Antriebssystems wirksam und effektiv verhindert werden.

Hinsichtlich eines einfachen Aufbaus ergeben sich hierbei Vorteile, wenn zur Steuerung des Fördervolumens der Verstellpumpe eine elektronische Steuereinrichtung vorgesehen ist, die eingangsseitig mit dem Temperatursensor und ausgangsseitig mit einer Stellvorrichtung der Verstellpumpe in Wirkverbindung steht. Durch entsprechende Ansteuerung einer das Fördervolumen der Verstellpumpe steuernden Stellvorrichtung kann das Fördervolumen der Pumpe auf einfache Weise an den benötigten Kühlleistungsbedarf des Antriebssystems angepasst werden.

Gemäß einer bevorzugten Ausgestaltungsform der Erfindung ist der Förderleitung der Pumpe eine Retarderbremsventileinrichtung zugeordnet. Mit einer derartigen Retarderbremsventileinrichtung erfolgt in einem Bremsbetrieb mit einem Retarderbetrieb eines Fahrantriebs ein Wärmeeintrag in das Druckmittel des Antriebssystems, wobei mit der erfindungsgemäßen Pumpe eine effektive Wärmeabgabe über die Wärmetauschereinrichtung an die Umgebung erzielbar ist.

Gleiches gilt, wenn gemäß einer weiteren Ausgestaltungsform der Erfindung das Antriebssystem einen hydrostatischen Fahrantrieb umfasst, bei dem in einem hydrostatischen Abbremsbetrieb ein hoher Wärmeeintrag in das Druckmittel des Antriebssystems erfolgt.

Die Erfindung betrifft weiterhin ein Verfahren zum Betrieb eines hydrostatischen Antriebssystems einer mobilen Arbeitsmaschine, insbesondere eines Flurförderzeugs, mit einer Arbeitshydraulik und einer hydraulischen, als im Fördervolumen verstellbaren Verstellpumpe zur Versorgung der Arbeitshydraulik, wobei die Verstellpumpe von einer Antriebsmaschine, insbesondere einem Verbrennungsmotor, angetrieben ist.

Hinsichtlich des Verfahrens wird die Aufgabe, bei geringem Bauaufwand eine Überhitzung des Druckmittels wirksam zu vermeiden und geringe Leistungsverluste beim Durchströmen der Wärmetauschereinrichtung zu erzielen, in erfindungsgemäßer Weise dadurch gelöst, dass einer von der Verstellpumpe zu der Arbeitshydraulik geführten Förderleitung eine Druckwaage zugeordnet ist, die als Eingangsdruckwaage der Arbeitshydraulik ausgebildet ist und in einer von der Förderleitung zu einem Behälter abzweigenden Rücklaufleitung angeordnet ist und als in Zwischenstellung drosselndes Steuerventil mit einer Sperrstellung und einer Durchflussstellung ausgebildet ist, wobei die Druckwaage von dem in der Förderleitung anstehenden Förderdruck der Pumpe in Richtung der Durchflussstellung und von einer Feder sowie dem höchsten Lastdruck der angesteuerten Verbraucher der Arbeitshydraulik in Richtung der Sperrstellung beaufschlagt ist, wobei in der Rücklaufleitung eine Wärmetauschereinrichtung zur Kühlung des Druckmittels des Antriebssystems angeordnet ist, wobei der Kühlleistungsbedarf des Antriebssystems ermittelt wird und durch eine Veränderung des Fördervolumens der Verstellpumpe der über die Wärmetauschereinrichtung strömende Druckmittelvolumenstrom an den Kühlleistungsbedarf des Antriebssystems angepasst wird. Durch eine Ermittlung bzw. Abschätzung des benötigten Kühlleistungsbedarfs des Antriebssystems und eine entsprechende Veränderung und somit Anpassung des Fördervolumens der Verstellpumpe kann der in der Rücklaufleitung der Druckwaage die Wärmetauschereinrichtung durchströmende Druckmittelvolumenstrom an den Kühlleistungsbedarf und somit die benötigte Kühlleistung auf einfache Weise angepasst werden, um einerseits eine Überhitzung des Druckmittels zu vermeiden und andererseits die Durchströmungsverluste und somit die Leistungsverluste an der Wärmetauschereinrichtung zu verringern.

Weitere Vorteile und Einzelheiten der Erfindung werden anhand des in der schematischen Figur dargestellten Ausführungsbeispiels näher erläutert.

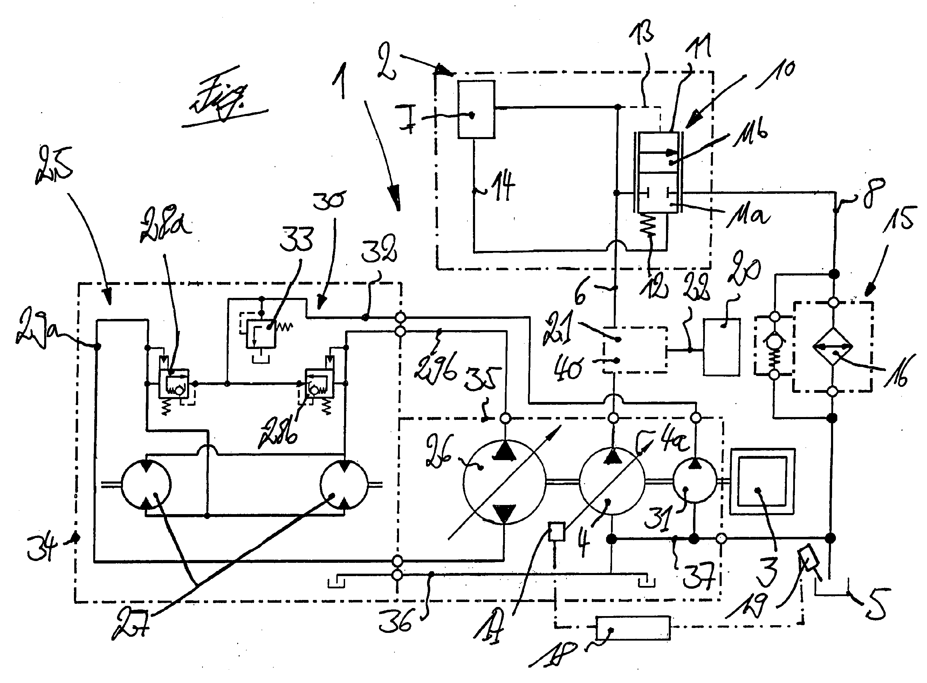

In der Figur 1 ist ein Schaltplan eines erfindungsgemäßen hydrostatischen Antriebssystems 1 einer beispielsweise als Flurförderzeug, insbesondere Gabelstapler, ausgebildeten mobilen Arbeitsmaschine gezeigt.

Das Antriebssystem 1 umfasst eine Arbeitshydraulik 2, die in der Ausführung der Arbeitsmaschine als Flurförderzeug beispielsweise einen Hubantrieb, einen Neigeantrieb und einen oder mehrere Zusatzverbraucher umfasst, die von einer Seitenschiebereinrichtung gebildet werden kann. Zur Versorgung der Verbraucher der Arbeitshydraulik 2 mit Druckmittel ist eine von einer Antriebsmaschine 3, beispielsweise einem Verbrennungsmotor, angetriebene Pumpe vorgesehen, die erfindungsgemäß als im Fördervolumen verstellbare Verstellpumpe 4, insbesondere als Axialkolbenpumpe in Schrägscheibenbauweise mit einer verstellbaren Schrägscheibe 4a, ausgebildet ist, bei der durch Veränderung der Neigung der Schrägscheibe 4a das Verdrängervolumen der Kolben und somit das Fördervolumen stufenlos verstellbar ist.

Die Verstellpumpe 4 steht eingangsseitig mit einem Behälter 5 in Verbindung und fördert in eine Förderleitung 6, die zu einer Steuerventileinrichtung 7 geführt ist, die mit den Steuerventilen zur Ansteuerung und Betätigung der Verbraucher der Arbeitshydraulik 2 versehen ist. Von der Förderleitung 6 zweigt eine zu dem Behälter 5 geführte Rücklaufleitung 8 ab, in der eine als Eingangsdruckwaage der Arbeitshydraulik 2 ausgebildete Druckwaage 10 angeordnet ist. Die Druckwaage 10 als in Zwischenstellung drosselndes Steuerventil 11 mit einer Sperrstellung 11a und einer Durchflussstellung 11 b ausgebildet, die von dem in der Förderleitung 6 anstehenden Förderdruck der Pumpe 4 in Richtung der Durchflussstellung 11 b und von einer Feder 12 sowie dem höchsten Lastdruck der angesteuerten Verbraucher der Arbeitshydraulik 2 in Richtung der Sperrstellung 11a beaufschlagt ist. Hierzu ist eine Steuerleitung 13 von der Förderleitung 6 zu einer entsprechenden in Richtung der Durchflussstellung 11b wirkenden Steuerfläche der Druckwaage 10 geführt. Eine den höchsten Lastdruck der angesteuerten Verbraucher der Arbeitshydraulik 2 führende Lastdruckmeldeleitung 14 ist an eine federseitige und in Richtung der Sperrstellung 11a wirkende Steuerfläche der Druckwaage 10 geführt.

In der Rücklaufleitung 8 ist stromab der Druckwaage 10 eine Wärmetauschereinrichtung 15 angeordnet, die von einem Kühler 16 gebildet ist. Die Wärmetauschereinrichtung 15 dient zum Abtransport der in das Druckmittel des hydrostatischen Antriebssystems 1 eingebrachten Wärmemenge an die Umgebung.

Zur Steuerung und Einstellung des Fördervolumens der Pumpe 4 ist eine Stellvorrichtung 17 vorgesehen, die beispielsweise als eine die Schrägscheibe 4a in der Neigung verstellende Stellkolbeneinrichtung ausgebildet ist. Zur Ansteuerung der Stellvorrichtung 17 der Pumpe 4 ist eine elektronische Steuereinrichtung 18 vorgesehen, die eingangsseitig mit einem die Temperatur des Druckmittels erfassenden Temperatursensor 19 in Wirkverbindung steht. In der Steuereinrichtung 18 kann hierbei anhand der von dem Temperatursensor 19 ermittelten Temperatur des Druckmittels des Antriebssystems 1 der Kühlleistungsbedarf ermittelt werden und durch entsprechende Ansteuerung der Stellvorrichtung 17 der Verstellpumpe 4 der Förderstrom der Pumpe 4 an den benötigten Kühlleistungsbedarf angepasst werden, der über die in die Durchflussstellung 11 b beaufschlagte Druckwaage 10 in die Rücklaufleitung 8 abströmt und somit die Wärmetauschereinrichtung 15 zur Abkühlung des Druckmittels durchströmt.

Das Antriebssystem 1 kann weiterhin eine hydraulische Lenkungseinrichtung 20 umfassen, die von der Verstellpumpe 4 versorgt wird. Zur bevorzugten Versorgung der Lenkungseinrichtung 20 ist in der Förderleitung 6 der Pumpe 4 ein Prioritätsventil 21 angeordnet, das mittels einer Förderzweigleitung 22 mit der Lenkungseinrichtung 20 verbunden ist.

Weiterhin umfasst das erfindungsgemäße Antriebssystem 1 einen hydrostatischen Fahrantrieb 25, der eine von der Antriebsmaschine 3 angetriebene Fahrpumpe 26 umfasst, die als im Fördervolumen verstellbare Verstellpumpe ausgebildet ist und im geschlossenen Kreislauf mit einem oder mehreren hydraulischen Fahrmotoren 27 im geschlossenen Kreislauf verbunden sind. Der hydrostatische Fahrantrieb 25 umfasst weiterhin Druckbegrenzungsventile 28a, 28b, die jeweils einer Druckmittelleitung 29a, 29b zugeordnet sind, die den geschlossenen Kreislauf des Fahrantriebs 25 bilden. Mit den Druckbegrenzungsventilen 28a, 28b kann im hydrostatischen Abbremsbetrieb des Fahrantriebs 25 der Druckmittelstrom in dem geschlossenen Kreislauf des Fahrantriebs 25 abgedrosselt werden. Hierbei wird Energie in Wärme umgewandelt und an das Druckmittel des Antriebssystems 1 abgegeben.

Die Druckbegrenzungsventile 28a, 28b weisen weiterhin die Funktion einer Einspeiseinrichtung für den Fahrantrieb 25 auf, die von integrierten Rückschlagventilen in den Druckbegrenzungsventilen 28a, 28b gebildet sind. Für die Einspeisung stehen die Druckbegrenzungsventile 28a, 28b mit einem Speisedruckkreislauf 30 in Verbindung. Der Speisedruckkreislauf 30 umfasst eine als Konstantpumpe mit konstantem Fördervolumen ausgebildete Speisepumpe 31, die von der Antriebsmaschine 3 angetrieben ist. Die Speisepumpe 31 steht eingangsseitig mit dem Behälter 5 in Verbindung und liefert einen mit der Drehzahl der Antriebsmaschine 3 proportionalen Förderstrom in eine Speiseleitung 32, die mit den Druckbegrenzungsventilen 28a, 28b in Verbindung steht. Der Speiseleitung 32 ist ein Druckbegrenzungsventil 33 zur Begrenzung und Absicherung des von der Speisepumpe 31 gelieferten Speisedruckes zugeordnet, das ausgangsseitig mit einem Gehäuse 34 der Fahrmotoren 27 verbunden ist.

Die Verstellpumpe 4 der Arbeitshydraulik 2, die Fahrpumpe 27 und die Speisepumpe 31 sind in einem gemeinsamen Gehäuse 35 angeordnet, das mittels einer Spülleitung 36 mit dem Gehäuse 34 der Fahrmotoren 27 in Verbindung steht. Die Spülleitung 36 ist an eine zu dem Behälter 5 geführte Saugleitung 37 angeschlossen, mittels der die Verstellpumpe 4 und die Speisepumpe 31 eingangsseitig mit dem Behälter 5 verbunden sind.

Der Förderleitung 6 der Pumpe 4 ist weiterhin ein Retarderventil 40 zugeordnet, mittels dem im Bremsbetrieb des Fahrantriebs 25 ein Retarderbetrieb der Verstellpumpe 4 erzielbar ist, mit dem Förderstrom der Verstellpumpe 4 abgedrosselt und somit Energie in Wärme umgewandelt werden kann, um an der Antriebsmaschine 3 ein Zusatzbremsmoment zur Verfügung zu stellen. Hierbei wird Energie in Wärme umgewandelt und an das Druckmittel des Antriebssystems 1 abgegeben.

Bei angesteuerten Lenkungseinrichtung 20 und/oder einem oder mehreren angesteuerten Verbrauchern der Arbeitshydraulik 2, wobei von den angesteuerten Verbraucher der Arbeitshydraulik 2 zur Erzielung der gewünschten Verbraucherbewegung ein Förderstrom benötigt wird, beispielsweise für den Hebenbetrieb eines Hubantriebs der Arbeitshydraulik, liefert die Verstellpumpe 4 der Arbeitshydraulik 2 an das Prioritätsventil 21 einen Förderstrom, um den Volumenstrom in der Förderzweigleitung 22 für die Lenkungseinrichtung 20 und den angeforderten Nutzvolumenstrom in der Förderleitung 6 für die Arbeitshydraulik 2 zur Verfügung zu stellen. Überschüssig geförderter Förderstrom der Verstellpumpe 4 strömt hierbei über die in die Durchflussstellung 11 b beaufschlagte Druckwaage 10 als Rücklaufstrom in die Rücklaufleitung 8 und dient als Druckmittelstrom zur Durchströmung der Wärmetauschereinrichtung 15. In einem Betriebszustand, bei dem ein angesteuerter Verbraucher der Arbeitshydraulik 2 keinen Volumenstrom von der Verstellpumpe zur Erzielung der Verbraucherbewegung anfordert und einen Druckmittelstrom bei der Verbraucherbewegung abgibt, beispielsweise im Senkenbetrieb eines Hubantriebs der Arbeitshydraulik, strömt der von dem Verbraucher abgegebene Druckmittelstrom über die in die Durchflussstellung 11 b beaufschlagte Druckwaage 10 als Rücklaufstrom in die Rücklaufleitung 8 und dient als Druckmittelstrom zur Durchströmung der Wärmetauschereinrichtung 15.

Mit der erfindungsgemäßen, als Verstellpumpe 4 ausgebildete Pumpe zur Versorgung der Arbeitshydraulik 2 und/oder der Lenkungseinrichtung 20 kann durch eine Veränderung des Fördervolumens der Verstellpumpe 4 der in der Rücklaufleitung 8 die Wärmetauschereinrichtung 15 durchströmende Druckmittelstrom an den benötigten Kühlleistungsbedarf des Antriebssystems 1 zur Abkühlung des Druckmittels stufenlos und unabhängig von der Drehzahl des Antriebsmotors 3 angepasst werden. Die erfindungsgemäße Anpassung des die Wärmetauschereinrichtung 15 durchströmende Druckmittelstroms und somit des Kühlölvolumenstroms ermöglicht es auf einfache Weise, eine Überhitzung des Druckmittels und somit eine Überhitzung des Antriebssystems 1 und dessen Komponenten zu vermeiden. Zudem können durch die erfindungsgemäße Anpassung der Kühlerdurchflussmenge die Strömungsverluste und somit die Leistungsverluste beim Durchströmen der von der Kühlereinrichtung 16 gebildeten Wärmetauschereinrichtung 15 verringert werden, wodurch eine Zunahme des Wirkungsgrades des Antriebssystems 1 erzielbar ist.

## Patentansprüche

1. Hydrostatisches Antriebssystem (1) einer mobilen Arbeitsmaschine, insbesondere eines Fiurförderzeugs, mit einer Arbeitshydraulik (2) und einer hydraulischen Pumpe (4) zur Versorgung der Arbeitshydraulik (2), wobei die Pumpe (4) von einer Antriebsmaschine (3), insbesondere einem Verbrennungsmotor, angetrieben ist und als im Fördervolumen verstellbare Verstellpumpe (4) ausgebildet ist, **dadurch gekennzeichnet, dass** einer von der Pumpe (4) zu der Arbeitshydraulik (2) geführten Förderleitung (6) eine Druckwaage (10) zugeordnet ist, die als Eingangsdruckwaage der Arbeitshydraulik (2) ausgebildet ist und in einer von der Förderleitung (6) zu einem Behälter (5) abzweigenden Rücklaufleitung (8) angeordnet ist und als in Zwischenstellung drosselndes Steuerventil (11) mit einer Sperrstellung (11a) und einer Durchflussstellung (11 b) ausgebildet ist, wobei die Druckwaage (10) von dem in der Förderleitung (6) anstehenden Förderdruck der Pumpe (4) in Richtung der Durchflussstellung (11b) und von einer Feder (12) sowie dem höchsten Lastdruck der angesteuerten Verbraucher der Arbeitshydraulik (2) in Richtung der Sperrstellung (11a) beaufschlagt ist, wobei in der Rücklaufleitung (8) eine Wärmetauschereinrichtung (15) zur Kühlung des Druckmittels des Antriebssystems (1) angeordnet ist, wobei durch eine Veränderung des Fördervolumens der Verstellpumpe (4) der über die Wärmetauschereinrichtung (15) strömende Druckmittelvolumenstrom an den Kühlleistungsbedarf des Antriebssystems (1) anpassbar ist.

2. Hydrostatisches Antriebssystem nach Anspruch 1, **dadurch gekennzeichnet, dass** das Fördervolumen der Verstellpumpe (4) stufenlos veränderbar ist.

3. Hydrostatisches Antriebssystem nach Anspruch 1 oder 2, dass zur Erfassung des Kühlleistungsbedarfs des Antriebssystems (1) ein die Temperatur des Druckmittels erfassender Temperatursensor (19) vorgesehen ist.

4. Hydrostatisches Antriebssystem nach Anspruch 3, dass zur Steuerung des Fördervolumens der Verstellpumpe (4) eine elektronische Steuereinrichtung (18) vorgesehen ist, die eingangsseitig mit dem Temperatursensor (19) und ausgangsseitig mit einer Stellvorrichtung (17) der Verstellpumpe (4) in Wirkverbindung steht.

5. Hydrostatisches Antriebssystem nach einem der Ansprüche 1 bis 4, dass der Förderleitung (6) der Pumpe (4) eine Retarderbremsventileinrichtung (40) zugeordnet ist.

6. Hydrostatisches Antriebssystem nach einem der Ansprüche 1 bis 5, dass das Antriebssystem (1) einen hydrostatischen Fahrantrieb (25) umfasst.

7. Verfahren zum Betrieb eines hydrostatisches Antriebssystems (1) einer mobilen Arbeitsmaschine, insbesondere eines Flurförderzeugs, mit einer Arbeitshydraulik (2) und einer hydraulischen, als im Fördervolumen verstellbaren Verstellpumpe (4) zur Versorgung der Arbeitshydraulik (2), wobei die Verstellpumpe (4) von einer Antriebsmaschine (3), insbesondere einem Verbrennungsmotor, angetrieben ist, **dadurch gekennzeichnet, dass** einer von der Verstellpumpe (4) zu der Arbeitshydraulik (2) geführten Förderleitung (6) eine Druckwaage (10) zugeordnet ist, die als Eingangsdruckwaage der Arbeitshydraulik (2) ausgebildet ist und in einer von der Förderleitung (6) zu einem Behälter (5) abzweigenden Rücklaufleitung (8) angeordnet ist und als in Zwischenstellung drosselndes Steuerventil (11) mit einer Sperrstellung (11a) und einer Durchflussstellung (11b) ausgebildet ist, wobei die Druckwaage (10) von dem in der Förderleitung (6) anstehenden Förderdruck der Pumpe (4) in Richtung der Durchflussstellung (11 b) und von einer Feder (12) sowie dem höchsten Lastdruck der angesteuerten Verbraucher der Arbeitshydraulik (2) in Richtung der Sperrstellung (11 a) beaufschlagt ist, wobei in der Rücklaufleitung (8) eine Wärmetauschereinrichtung (15) zur Kühlung des Druckmittels des Antriebssystems (1) angeordnet ist, wobei der Kühlleistungsbedarf des Antriebssystems (1) ermittelt wird und durch eine Veränderung des Fördervolumens der Verstellpumpe (4) der über die Wärmetauschereinrichtung (15) strömende Druckmittelvolumenstrom an den Kühlieistungsbedarf des Antriebssystems (1) angepasst wird.

## Claims

1. Hydrostatic drive system (1) of a mobile machine, in particular an industrial truck, having working hydraulics (2) and a hydraulic pump (4) for supplying the working hydraulics (2), wherein the pump (4) is driven by a drive machine (3), in particular an internal combustion engine and is embodied as an adjustment pump (4) with an adjustable delivery volume, **characterized in that** a pressure balance (10), which is embodied as an input pressure balance of the working hydraulics (2) and is arranged in a return line (8) which branches off from the feed line (6) to a container (5) and is embodied as a control valve (11) which settles in the intermediate position and has a closed position (11a) and an open position (11b) is assigned to a feed line (6) from the pump (4) to the working hydraulics (2), wherein the pressure balance (10) is acted on in the direction of the open position (11b) by the feed pressure of the pump (4) which is present in the feed line (6), and is acted on in the direction of the closed position (11a) by a spring (12) and by the maximum load pressure of the actuated consumers of the working hydraulics (2), wherein a heat exchanger device (15) for cooling the pressure medium of the drive system (1) is arranged in the return line (8), wherein the pressure medium volume flow flowing via the heat exchanger device (15) can be adapted to the required cooling performance of the drive system (1) by changing the delivery volume of the adjustment pump (4).

2. Hydrostatic drive system according to Claim 1, **characterized in that** the delivery volume of the adjustment pump (4) can be changed in an infinitely variable fashion.

3. Hydrostatic drive system according to Claim 1 or 2, in that a temperature sensor (19) which senses the temperature of the pressure medium is provided for sensing the required cooling performance of the drive system (1).

4. Hydrostatic drive system according to Claim 3, in that an electronic control device (18) is provided for controlling the delivery volume of the adjustment pump (4), which electronic control device (18) is operatively connected on the input side to the temperature sensor (19) and on the output side to an actuating device (17) of the adjustment pump (4).

5. Hydrostatic drive system according to one of Claims 1 to 4, in that a retarder brake valve device (40) is assigned to the feed line (6) of the pump (4).

6. Hydrostatic drive system according to one of Claims 1 to 5, in that the drive system (1) comprises a hydrostatic traction drive (25).

7. Method for operating a hydrostatic drive system (1) of a mobile machine, in particular of an industrial truck, having working hydraulics (2) and a hydraulic adjustment pump (4) with an adjustable delivery volume, for supplying the working hydraulics (2), wherein the adjustment pump (4) is driven by a drive machine (3), in particular an internal combustion engine, **characterized in that** a pressure balance (10), which is embodied as an input pressure balance of the working hydraulics (2) and is arranged in a return line (8) which branches off from the feed line (6) to a container (5) and is embodied as a control valve (11) which settles in the intermediate position and has a closed position (11a) and an open position (11b) is assigned to a feed line (6) leading from the adjustment pump (4) to the working hydraulics (2), wherein the pressure balance (10) is acted on in the direction of the open position (11b) by the feed pressure of the pump (4) which is present in the feed line (6), and is acted on in the direction of the closed position (11a) by a spring (12) and by the maximum load pressure of the actuated consumers of the working hydraulics (2), wherein a heat exchanger device (15) for cooling the pressure medium of the drive system (1) is arranged in the return line (8), wherein the required cooling performance of the drive system (1) is determined and the pressure medium volume flow flowing via the heat exchanger device (15) can be adapted to the required cooling performance of the drive system (1) by changing the delivery volume of the adjustment pump (4).

## Revendications

1. Système d'entraînement hydrostatique (1) d'un engin de travail mobile, en particulier d'un chariot de manutention, comprenant un système hydraulique de travail (2) et une pompe hydraulique (4) pour l'alimentation du système hydraulique de travail (2), la pompe (4) étant entraînée par un moteur d'entraînement (3), en particulier un moteur à combustion interne, et étant réalisée sous forme de pompe de réglage (4) à volume de refoulement réglable, **caractérisé en ce qu'**une conduite de refoulement (6) conduisant de la pompe (4) au système hydraulique de travail (2) est associée à une balance de pression (10) qui est réalisée sous forme de balance de pression d'entrée du système hydraulique de travail (2) et qui est disposée dans une conduite de retour (8) partant de la conduite de refoulement (6) jusqu'à un récipient (5) et est réalisée sous forme de soupape de commande (11) avec étranglement dans une position intermédiaire et avec une position de blocage (11a) et une position de passage (11b), la balance de pression (10) étant sollicitée par la pression de refoulement de la pompe (4) s'exerçant dans la conduite de refoulement (6) dans la direction de la position de passage (11b) et par un ressort (12) ainsi que par la pression de charge maximale du consommateur commandé du système hydraulique de travail (2) dans la direction de la position de blocage (11a), un dispositif échangeur de chaleur (15) pour le refroidissement du fluide sous pression du système d'entraînement (1) étant disposé dans la conduite de retour (8), le débit volumique de fluide sous pression s'écoulant par le biais du dispositif échangeur de chaleur (15) pouvant être adapté par une modification du volume de refoulement de la pompe de réglage (4) au besoin en puissance de refroidissement du système d'entraînement (1).

2. Système d'entraînement hydrostatique selon la revendication 1, **caractérisé en ce que** le volume de refoulement de la pompe de réglage (4) peut être modifié par variation continue.

3. Système d'entraînement hydrostatique selon la revendication 1 ou 2, en ce que pour détecter le besoin en puissance de refroidissement du système d'entraînement (1), il est prévu un capteur de température (19) détectant la température du fluide sous pression.

4. Système d'entraînement hydrostatique selon la revendication 3, en ce que pour la commande du volume de refoulement de la pompe de réglage (4), il est prévu un dispositif de commande électronique (18) qui est en liaison fonctionnelle du côté de l'entrée avec le capteur de température (19) et du côté de la sortie avec un dispositif de commande (17) de la pompe de réglage (4).

5. Système d'entraînement hydrostatique selon l'une quelconque des revendications 1 à 4, en ce que la conduite de refoulement (6) de la pompe (4) est associée à un dispositif de soupape de frein ralentisseur (40).

6. Système d'entraînement hydrostatique selon l'une quelconque des revendications 1 à 5, en ce que le système d'entraînement (1) comprend un entraînement de conduite hydrostatique (25).

7. Procédé pour faire fonctionner un système d'entraînement hydrostatique (1) d'un engin de travail mobile, en particulier d'un chariot de manutention, comprenant un système hydraulique de travail (2) et une pompe de réglage (4) hydraulique à volume de refoulement réglable, pour l'alimentation du système hydraulique de travail (2), la pompe de réglage (4) étant entraînée par un moteur d'entraînement (3), en particulier un moteur à combustion interne, **caractérisé en ce qu'**une conduite de refoulement (6) conduisant de la pompe de réglage (4) au système hydraulique de travail (2) est associée à une balance de pression (10) qui est réalisée en tant que balance de pression d'entrée du système hydraulique de travail (2) et qui est disposée dans une conduite de retour (8) partant de la conduite de refoulement (6) jusqu'à un récipient (5) et qui est réalisée en tant que soupape de commande (11) avec étranglement dans une position intermédiaire et avec une position de blocage (11a) et une position de passage (11b), la balance de pression (10) étant sollicitée par la pression de refoulement de la pompe (4) s'exerçant dans la conduite de refoulement (6) dans la direction de la position de passage (11b) et par un ressort (12) ainsi que par la pression de charge maximale du consommateur commandé du système hydraulique de travail (2) dans la direction de la position de blocage (alla), un dispositif échangeur de chaleur (15) pour le refroidissement du fluide sous pression du système d'entraînement (1) étant disposé dans la conduite de retour (8), le besoin en puissance de refroidissement du système d'entraînement (1) étant déterminé et le débit volumique de fluide sous pression s'écoulant par le biais du dispositif échangeur de chaleur (15) pouvant être adapté par une modification du volume de refoulement de la pompe de réglage (4) au besoin en puissance de refroidissement du système d'entraînement (1).
